# EUROPEAN PATENT APPLICATION

(11) **EP 4 636 625 A1**
(43) Date of publication of application: **22.10.2025**
(21) Application number: 25170942.4
(22) Date of filing: 16.04.2025
(51) Int. Cl.: G06F 21/55, G06F 21/57

(54) **CYBERSECURITY COMMAND LINE ASSESSMENT**

(30) Priority: 18.04.2024 US 202418639506
(71) Applicant: CrowdStrike, Inc., Sunnyvale, CA 94086 (US)
(72) Inventor: Esfahani, Michael, Sunnyvale, 94086 (US); Serebrennikov, Dmitry, Sunnyvale, 94086 (US); Wald, Arnaud, Sunnyvale, 94086 (US); Stein, Stefan, Sunnyvale, 94086 (US); Feener, Tyler, Sunnyvale, 94086 (US); Widen, Tanya, Sunnyvale, 94086 (US); Edwards, Paul, Sunnyvale, 94086 (US)
(74) Representative: Murgitroyd & Company

(57) **Abstract**

A cloud-based, machine-learned cybersecurity command line interpretation service simplifies complex command lines using plain language. Command lines are input to the cybersecurity command line interpretation service for an interpretation by a machine learning model. If, however, a command line is known and been previously interpreted, then the cybersecurity command line interpretation service may conserve hardware and software resources by retrieving a historical command line interpretation. If the command line is unknown or not historically logged, then the cybersecurity command line interpretation service may generate a current command line interpretation using the machine learning model. The cybersecurity command line interpretation service may then generate a cybersecurity prediction associated with the command line based on the historical or current command line interpretation. The cybersecurity command line interpretation service thus provides a much faster interpretation and cybersecurity prediction for assessing command lines as malicious or benign.

## Description

### BACKGROUND

The subject matter described herein generally relates to computers and, more particularly, the subject matter relates to machine learning, to neural networking, to large language modeling, and to cybersecurity.

Cybersecurity threats are always increasing. Every day, a cybersecurity service provider may receive millions of reports of suspicious computer activity from client devices. These reports of suspicious computer activity are often manually inspected and assessed by human experts. The human experts, for example, may scrutinize very complex process trees and command lines to confirm whether computer activity is truly suspicious (a true positive report) or harmless activity (a false positive report). Needless to say, human inspection and assessment requires great skill and much time. As the volume of cybersecurity detections is always increasing, the human experts struggle to manage the volume.

### SUMMARY

A cloud-based, machine-learned cybersecurity command line interpretation service simplifies complex command lines using plain language. The command line interpretation service provides a detailed description of the effects of the command lines. The command line interpretation service may also assess command lines as malicious or benign. Command lines are input to the cybersecurity command line interpretation service for a simpler, even plain-language, interpretation. If a command line is known and has been previously interpreted, then the cybersecurity command line interpretation service may conserve hardware and software resources by retrieving a historical command line interpretation. If the command line, however, is unknown or not historically interpreted, then the cybersecurity command line interpretation service may submit the command line to a machine learning model. The machine learning model is trained to interpret or translate the command line. The cybersecurity command line interpretation service may then generate a cybersecurity prediction. The cybersecurity command line interpretation service thus predicts whether the command line is suspicious or is harmless activity. The cybersecurity command line interpretation service enables an elegantly simple and fast pre-screening of command lines. The cybersecurity command line interpretation service provides a much faster, initial assessment that easily manages the ever-increasing reports of suspiciousness from the client devices. Accordingly there is provided a method, a system, and a memory devices as detailed in the claims that follow.

### BRIEF DESCRIPTION OF THE SEVERAL VIEWS OF THE DRAWINGS

The features, aspects, and advantages of cybersecurity command line assessment are understood when the following Detailed Description is read with reference to the accompanying drawings, wherein:
FIG. 1 illustrates some examples of cybersecurity assessment of command lines;
FIG. 2 illustrates examples of a command line interpretation service;
FIGs. 3-5 illustrate some examples of resource conservation;
FIGs. 6-8 illustrates some examples of training and machine learning;
FIG. 9 illustrates some examples of cybersecurity enrichment;
FIG. 10 illustrates more examples of cybersecurity service records;
FIG. 11 illustrates some examples of application programming interfaces (or APIs);
FIG. 12 illustrates some examples of local assessment;
FIGs. 13-14 illustrate examples of recursive analysis;
FIGs. 15-18 illustrate examples of methods or operations that assess command lines; and
FIG. 18 illustrates a more detailed example of an operating environment.

### DETAILED DESCRIPTION

Some examples relate to assessing command lines and process trees. As we know, nearly every day we read of another network hack, computer virus, or other cybersecurity threat. Some of these cybersecurity threats attempt to execute malicious command lines and/or process trees. These command lines and process trees are exceptionally complicated computer lines of text. These command lines and process trees are so complex, in fact, that teams of expert threat hunters may require many minutes to interpret them. A cybersecurity command line interpretation service, though, quickly catches and stops these command lines and process trees before damage is done. Before a computer executes a command line, the command line interpretation service reads the command line and may generate a simplified, plain language explanation. The command line interpretation service may also predict whether the command line is malicious or benign, based on the simplified, plain language explanation. The command line interpretation service applies artificial intelligence and machine learning to predict whether the command line is safe or harmful. Indeed, the command line interpretation service may generate its prediction in perhaps seconds. The command line interpretation service thus provides a quick assessment of very complicated command lines and process trees.

The cybersecurity command line interpretation service demystifies command lines and process trees. By analyzing the command lines and process trees, cybersecurity threats can be revealed. Human interpretation of command lines and process trees, though, consumes much time and requires great skill. Indeed, the time required to interpret complex command lines and process trees often leads to an expansion of an already mounting backlog that requires hours of analysis. The cybersecurity command line interpretation service, however, provides an accurate and simplified interpretation. The cybersecurity command line interpretation service may also provide a prediction of safe or harmful. Complex command lines and process trees are quickly translated with the click of a button.

Cybersecurity command line assessment will now be described more fully hereinafter with reference to the accompanying drawings. Cybersecurity command line assessment, however, may be embodied in many different forms and should not be construed as limited to the examples set forth herein. These examples are provided so that this disclosure will be thorough and complete and fully convey cybersecurity command line assessment to those of ordinary skill in the art. Moreover, all the examples of cybersecurity command line assessment are intended to encompass both structural and functional equivalents thereof. Additionally, it is intended that such equivalents include both currently known equivalents as well as equivalents developed in the future (i.e., any elements developed that perform the same function, regardless of structure).

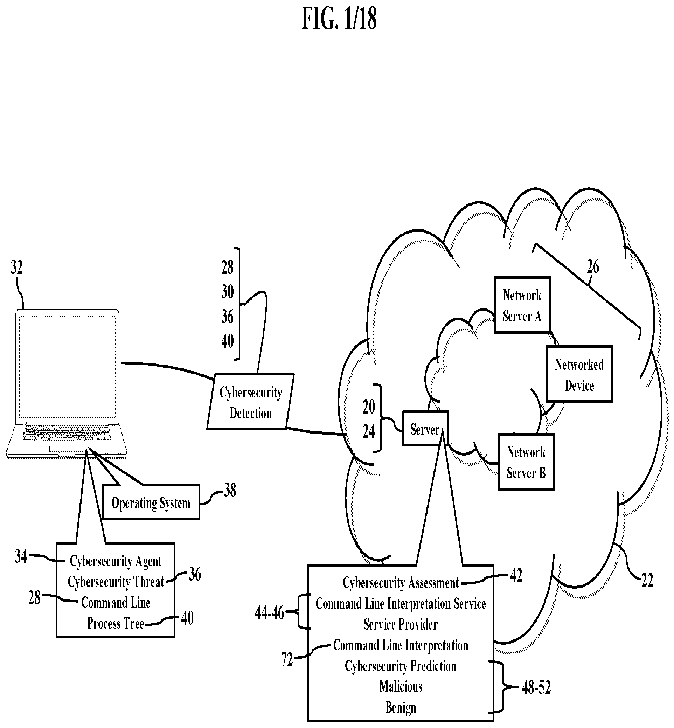

FIG. 1 illustrates some examples of cybersecurity assessment of command lines. A computer system 20 operates in a cloud computing environment 22. FIG. 1 illustrates the computer system 20 as a server 24. The computer system 20, though, may be other processor-controlled devices, as later paragraphs will explain. In this example, the server 24 communicates via the cloud computing environment 22 *(e.g.,* public Internet, private network, and/or hybrid network) with other servers, devices, computers, or other networked members 26 operating within, or affiliated with, the cloud computing environment 22. The server 24 is programmed to pre-screen or assess a command line 28 associated with a cybersecurity detection 30. The cybersecurity detection 30, for example, is detected by a client device 32. The client device 32 stores and executes a cybersecurity agent 34. The cybersecurity agent 34 is a software product that monitors the client device 32 for suspicious activities and other evidence of potential cybersecurity threats 36. When the cybersecurity agent 34 detects the potential cybersecurity threat 36, the cybersecurity agent 34 cooperates with an operating system 38 to obtain the command line(s) 28 and/or process trees 40 associated with the potential cybersecurity threat 36. The cybersecurity agent 34 then causes the client device 32 to report the cybersecurity detection 30 to the cloud computing environment 22. The cybersecurity detection 30 alerts or notifies the cloud computing environment 22 that the client device 32 has detected the potential cybersecurity threat 36. The cybersecurity detection 30 may include or specify the command line(s) 28 and/or the process tree(s) 40. When the cloud computing environment 22 receives the cybersecurity detection 30, the cloud computing environment 22 may conduct a fuller, more detailed cybersecurity assessment 42 of the command line(s) 28, the process tree(s) 40, and/or the potential cybersecurity threat 36.

The server 24 performs the detailed cybersecurity assessment 42. When the cloud computing environment 22 receives the cybersecurity detection 30 sent by the client device 32, the cloud computing environment 22 may route or forward the cybersecurity detection 30 to the server 24. When the server 24 receives the cybersecurity detection 30, the server 24 may provide a command line interpretation service 44 on behalf of a 1^{st} party, 2^{nd} party, or 3^{rd} party service provider 46. The command line interpretation service 44 accepts the command line(s) 28 and/or the process tree(s) 40 as inputs and generates a simplified explanation (illustrated as a command line interpretation 72) as an output. The command line interpretation service 44, in other words, provides a plain-language explanation of the very complex command line 28. The command line interpretation service 44 may also generate a cybersecurity prediction 48 as another output. The command line interpretation service 44, in other words, explains complex command line(s) 28 using simpler language. The command line interpretation service 44 may also predict whether the command line(s) 28 and/or the process tree(s) 40 is/are malicious 50 or benign 52, based on the much-simpler, plain language command line interpretation 72.

The command lines 28 and process trees 40 are very complex. Each command line 28 is a complicated, alphanumeric textual sequence specifying computer commands, instructions, and parameters. Each process tree 40 is a group of individual command lines 28, so each process tree 40 may be even more complex. Every character of every command line 28, and the overall character combination, must ordinarily be scrutinized to assess as malicious 50 or benign 52. As millions of cybersecurity detections 30 may be reported on a daily basis, humans simply cannot quickly assess the huge amount of cybersecurity threats 36. The command line interpretation service 44, though, may predict whether the command line(s) 28 and/or the process tree(s) 40 are malicious 50 or benign 52, based on the much-simpler, plain language command line interpretation 72. The command line interpretation service 44 uses artificial intelligence and machine-learned pattern recognition to quickly assess the command line interpretation 72 as malicious 50 or benign 52.

The command line interpretation service 44 describes an anatomy of the command line 28. The much-simpler, plain language command line interpretation 72, for example, describes what command is being invoked, which arguments are being supplied, and what is the function of each argument. The command line interpretation service 44 may also summarize the overall effect of the command line 28. These anatomical interpretations may be just as important as the effects of the command line 28. These anatomical interpretations, for example, allow a user (such as a human expert cybersecurity analyst) to judge how much the client device 32 truly understood the command line 28 or if the client device 32 made a mistake. Indeed, if the artificial intelligence hallucinates and makes a mistake interpreting the command line 28, this transparency may be desired for safe adoption of the machine-learned command line interpretation service 44.

The command line interpretation service 44 may thus be an automated documentation assistant. The command line interpretation service 44, for example, may pre-screen the cybersecurity detection 30 (such as the predictive malicious 50 or benign 52 based on the much-simpler, plain language command line interpretation 72). The command line interpretation service 44 may also help or assist human expert cybersecurity analysts when triaging the cybersecurity detection 30 (such as examining the command line 28 for false positives). The command line interpretation service 44 may also provide an in-depth analysis and planning of remediation. The command line interpretation service 44 thus provides leverage to the human expert cybersecurity analysts by helping them far more quickly understand and interpret the command line(s) 28. The much-simpler, plain language command line interpretation 72, for example, provides a quick confirmation of what the human expert cybersecurity analyst already knows. Sometimes, though, the command line interpretation 72 cuts out hours of research that the analyst would otherwise need to do.

The command line interpretation service 44 may instruct the client device 32. The command line interpretation service 44 assesses the command line 28, and/or the process tree 40, generates the much-simpler, plain language command line interpretation 72, and/or generates the cybersecurity prediction 48. The command line interpretation service 44 may then instruct the client device 32 to block, or to allow, the command line 28 and/or the process tree 40. The command line interpretation service 44, for example, may instruct or cause the server 24 to send the cybersecurity prediction 48 back to the endpoint cybersecurity agent 34. The endpoint cybersecurity agent 34 may then cooperate with the operating system 38 to implement the cybersecurity prediction 48. If, for example, the cybersecurity prediction 48 indicates that the command line(s) 28 is/are malicious 50, then the endpoint cybersecurity agent 34 may recommend that the operating system 38 block, deny, halt, or discard the command line(s) 28. The command line interpretation service 44 thus stops the cybersecurity threat 36. If, however, the cybersecurity prediction 48 indicates that the command line(s) 28 is/are benign 52, then the endpoint cybersecurity agent 34 may recommend that the operating system 38 proceed and execute the command line(s) 28.

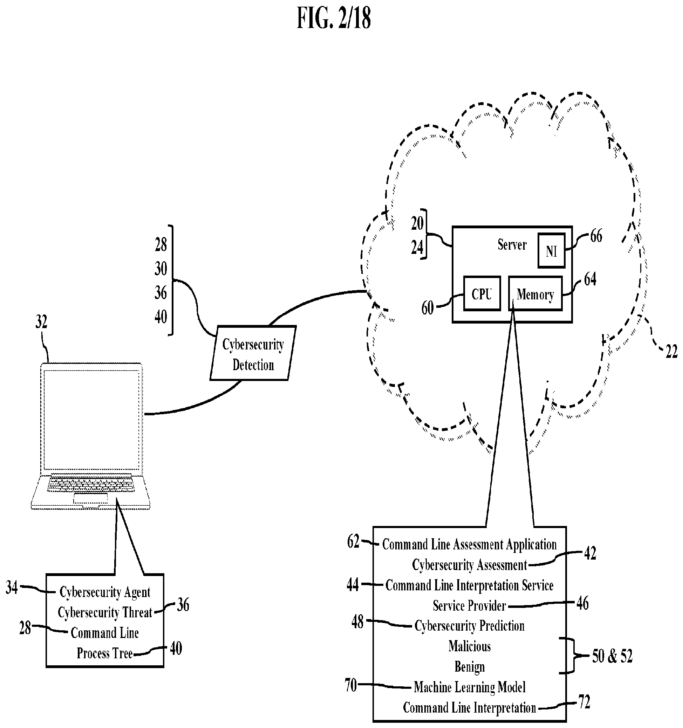

FIG. 2 illustrates more examples of the command line interpretation service 44. The server 24 has at least one hardware processor 60 (illustrated as "CPU") that executes a command line assessment application 62 stored in a memory device 64. The server 24 also has network interfaces (illustrated as "NI") 66 to multiple communications networks (such as the cloud computing environment 22), thus allowing bi-directional communications with networked devices. When the server 24 receives the command line(s) 28 and/or the process tree(s) 40, the command line assessment application 62 may be a computer program, instruction(s), or code that instructs or causes the server 24 to preliminarily assess the command line(s) 28 and/or the process trees 40. The command line assessment application 62, for example, may instruct the server 24 to submit the command line 28 and/or the process tree 40 to a machine learning model 70. While the machine learning model 70 may be hosted at a networked location, FIG. 2 illustrates a simple co-hosting example by the server 24. That is, the server 24 may store the machine learning model 70 in the memory device 64, and the hardware processor 60 may execute the machine learning model 70. As another example, a powerful graphics processing unit (or GPU) may execute the machine learning model 70. As yet another example, the machine learning model 70 may be remotely hosted and called via the cloud computing environment using application programming interfaces (or APIs). The command line interpretation service 44 thus uses artificial intelligence, machine learning, neural networking, and/or large language models to generate the command line interpretation 72 by using the machine learning model 70 to interpret the command line 28 and/or the process tree 40. The command line assessment application 62 may further instruct the server 24 to generate the cybersecurity prediction 48 based on the command line interpretation 72 generated by the machine learning model 70. The command line interpretation service 44 may thus categorize the command line(s) 28 and/or the process trees 40 as malicious 50 or as benign 52, based on the command line interpretation 72 generated by the machine learning model 70.

The command line interpretation 72 may simplify the command lines 28 and process trees 40. As the above paragraphs explained, the command lines 28 and process trees 40 are very complex and very difficult to understand. Each command line 28 is a complicated, alphanumeric textual sequence specifying computer commands, instructions, and parameters. Each process tree 40 may be an even more complex group of individual command lines 28. The command line interpretation 72, though, may translate or simplify the command lines 28 and process trees 40, using plainer language than complicated programming code statements. The command line interpretation 72, as an example, provides an explanation of form, function, and/or parameters associated with the command line 28 and/or the process tree 40.

The command line interpretation 72 differs from the command line 28. The command line interpretation 72, generated by the machine learning model 70, has different and/or additional content to the command line 28. That is, the command line interpretation 72 has information not present in the original command line 28. The command line interpretation 72 derives from the knowledge embedded in the machine learning model 70 during training. The command line interpretation 72, on that basis alone, provides a different signal for malicious 50 or benign 52 prediction/classification. Indeed, the command line interpretation 72 may be a stronger predictive indicator signal in some cases.

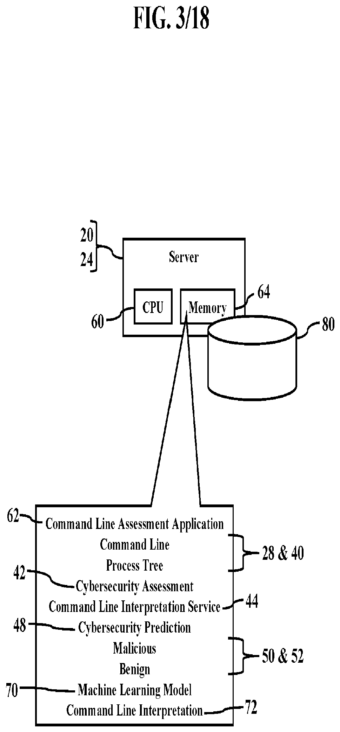

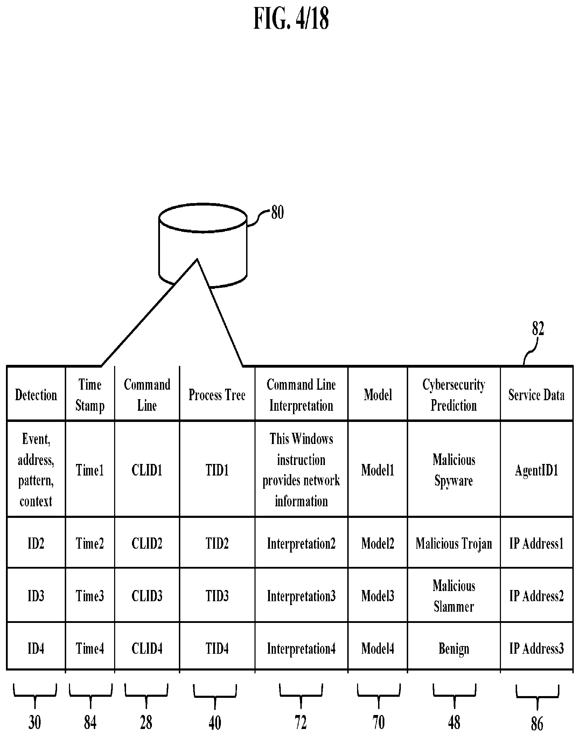

FIGs. 3-5 illustrate some examples of resource conservation. When the server 24 receives the command line(s) 28 and/or the process trees 40, the command line assessment application 62 may first check for previous interpretations. That is, the command line assessment application 62 may determine whether the command line interpretation service 44 has already been applied to the command line(s) 28 and/or the process trees 40. The command line assessment application 62, for example, may query a command line interpretation service database 80. The command line interpretation service database 80 stores an electronic record of each command line interpretation 72 generated by the machine learning model 70. The command line interpretation service database 80 logs each command line 28 and/or each process tree 40 and its/their corresponding command line interpretation(s) 72. The command line interpretation service 44 thus maintains a rich repository of historical cybersecurity knowledge. As the cloud computing environment 22 (illustrated in FIGs. 1-2) receives and assesses the command line(s) 28 and/or the process trees 40, the cloud computing environment 22 may collect and store the corresponding command line interpretations 72 to the electronic command line interpretation service database 80. While the command line interpretation service database 80 may be remotely stored and accessed/queried from a networked location, for simplicity, FIG. 3 illustrates local resourcing. FIG. 3 illustrates the command line interpretation service database 80 locally stored in the memory device 64 of the server 24. Even though the command line interpretation service database 80 may have a logical structure, a relational database is perhaps easiest to understand. FIG. 4 thus illustrates the electronic command line interpretation service database 80 as a table 82 having row and columnar database entries that map, relate, convert, or associate different command lines 28 and process trees 40 to their corresponding command line interpretation(s) 72. The electronic command line interpretation service database 80 may further have entries that identify/log the particular machine learning model 70 that generated the command line interpretation(s) 72. As the many command lines 28 and process trees 40 are routed to the server 24, the command line assessment application 62 may add database entries that log each command line 28, and/or each process tree 40, to its corresponding command line interpretation 72, its corresponding date/time stamp 84, and other electronic service data 86 (such as the detecting/originating client device 32 and/or the cybersecurity agent 34). Indeed, the command line assessment application 62 may further log the corresponding cybersecurity prediction 48 (such as the malicious 50 or benign 52 classification).

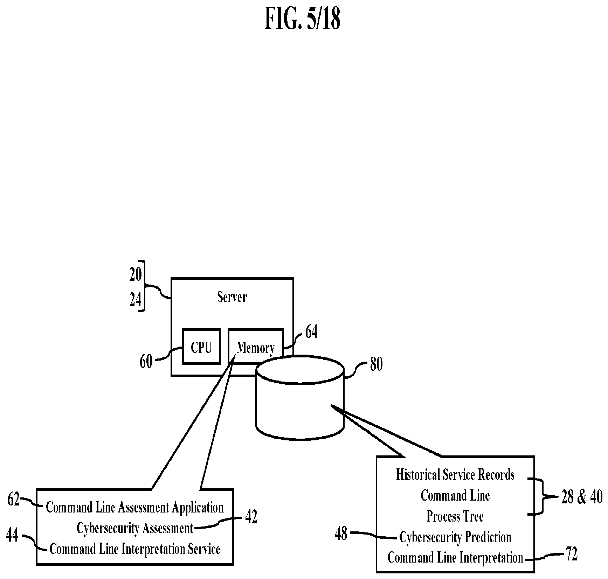

FIG. 5 thus illustrates improved computer functioning. When the command line interpretation service 44 receives a new or current command line 28 and/or process tree 40 for a cybersecurity interpretation, the command line interpretation service 44 may first check for known/historical work. The command line assessment application 62, for example, may query the command line interpretation service database 80 and specify the command line 28 and/or the process tree 40 as a query parameter. The command line interpretation service database 80 thus performs a database lookup and identifies and/or retrieves a historically-assessed cybersecurity command line interpretation 72 that was previously logged. If a matching database entry is determined, then the command line assessment application 62 may identify and/or retrieve any corresponding columnar/row entries (illustrated in FIG. 4).

Hardware and software resources are reduced. Because the command line interpretation service 44 maintains historical service records, the command line interpretation service 44 conserves resources. When the command line 28 and/or process tree 40 is logged by the command line interpretation service database 80, then the command line interpretation service 44 need not send the command line 28 and/or the process tree 40 to the machine learning model 70 to determine the command line interpretation 72 (as explained with reference to FIG. 2). The command line interpretation service 44 may thus decline to submit the command line 28 and/or the process tree 40 to the machine learning model 70. The command line interpretation service 44, instead, may retrieve the historical command line interpretation 72 previously logged to the command line interpretation service database 80. Because the command line interpretation service 44 has previously interpreted the command line 28 and/or the process tree 40, the command line interpretation service 44 need only identify and retrieve the historical service records. The command line assessment application 62 may further instruct the server 24 to generate the cybersecurity prediction 48 based on the historical command line interpretation 72 retrieved from the command line interpretation service database 80. The command line interpretation service 44 may thus categorize the current command line 28 and/or the current process tree 40 as malicious 50 or as benign 52, based on the historical service records. The command line interpretation service 44 thus greatly reduces byte memory consumption and processing cycles in the server 24 by eliminating unnecessary and wasteful use of the machine learning model 70. Moreover, database lookups are much faster than computational modeling, so the server 24 generates a much faster result using far less electrical power. Computer functioning is greatly improved.

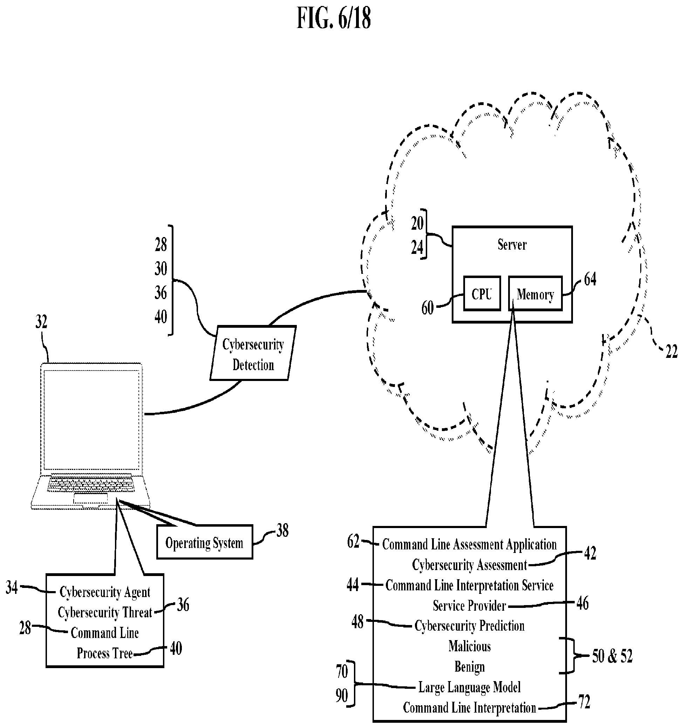

FIGs. 6-8 illustrates some examples of training. The machine learning model 70 is trained to interpret the command line 28 and/or the process tree 40. As an example, the machine learning model 70 may be a pre-trained, large language model 90. The large language model 90 uses deep, neural networking and massive amounts of training data to predict patterns in textual sequences (such as the command line 28 and/or the process tree 40). Some examples of the large language model 90 include META CODE LLAMA^{®} and OPENAI^{®} (such as ChatGPT or generative pre-trained transformer). The large language model 90, in particular, may be pre-trained using documentation describing different command lines 28 and process trees 40. This pre-training may further include documents describing variants and versions of the operating system 38. The machine learning model 70 is thus trained to generate the command line interpretation 72 associated with the command line 28 and/or the process tree 40. The machine learning model 70 may further be trained to generate the cybersecurity prediction 48 based on the command line interpretation 72.

The command line interpretation service 44 thus quickly predicts the cybersecurity threats 36. The command line interpretation service 44 relies on AI technology to quickly interpret, and contextually process, the command line 28 and the process tree 40. The command line interpretation service 44 pre-screens the command line 28 and the process tree 40 and predicts their malicious/benign 50/52 effect. Human expert cybersecurity analysts, for example, may thus use the command line interpretation service 44 to make quick, initial judgments about the maliciousness of a software program executed by the client device 32. Moreover, the command line interpretation service 44 may process expressions in structured languages (such as the command line 28 and the process tree 40). The command line interpretation service 44 may further contextualize the general knowledge the large language model 90 contains against these expressions.

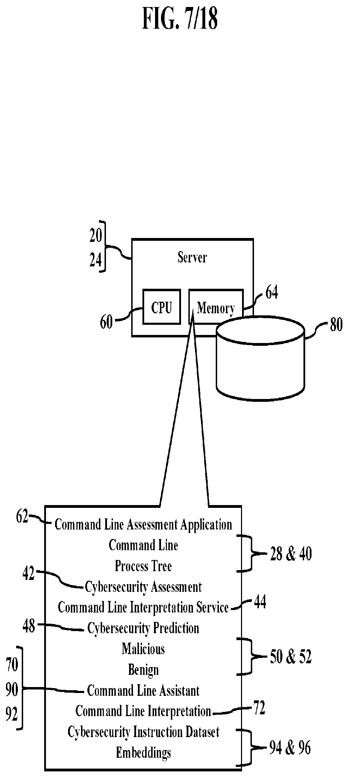

As FIG. 7 illustrates, the machine learning model 70 may be further trained as a command line assistant 92. The machine learning model 70 (such as the large language model 90) may be fine-tuned or steered as the command line assistant 92. The machine learning model 70 may be refined using a cybersecurity instruction dataset 94 that is specifically tailored to interpreting the command line 28 and/or the process tree 40 and to accurately predicting the malicious/benign 50/52. The machine learning model 70, for example, may be trained as the command line assistant 92 using a cybersecurity corpus of embeddings 96 representing the command lines 28 and/or the process trees 40. The cybersecurity corpus of the embeddings 96, as an example, may represent the command lines 28 and/or the process trees 40 that have been historically categorized as the malicious 50 and as the benign 52. The machine learning model 70 may thus be specifically trained to accurately generate the cybersecurity prediction 48 using cybersecurity categorized labels and assessments by human expert cybersecurity analysts.

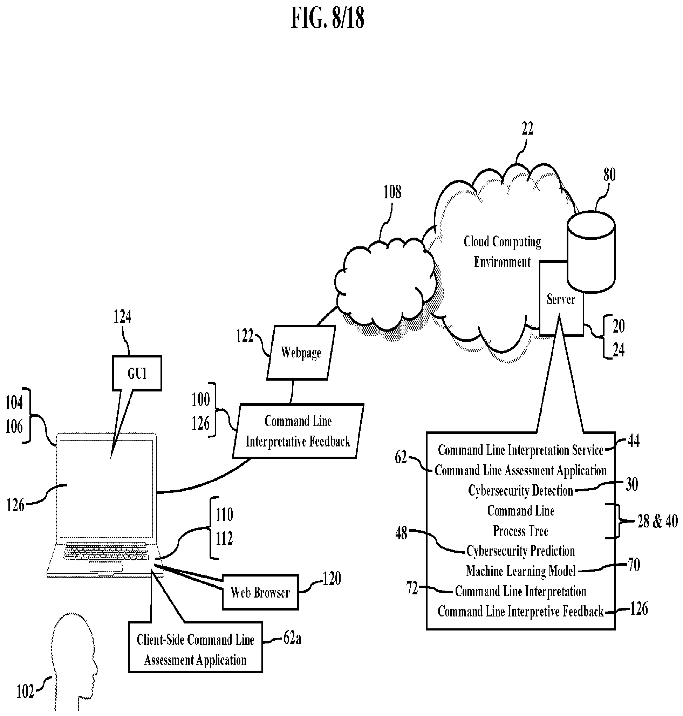

As FIG. 8 illustrates, the machine learning model 70 may be further refined using cybersecurity reinforcement learning 100. The command line interpretation service 44 may have a user/web interface that allows user interaction and feedback. FIG. 8 thus illustrates remote access to the command line interpretation service 44. A human expert cybersecurity analyst 102, for example, may use an analyst's computer 104 to interface with the server 24. FIG. 8 illustrates the analyst's computer 104 as a remote laptop computer 106, but the analyst's computer 104 may be a smartphone, tablet, server, or other computer system. The analyst's computer 104 has a network interface to an access network or other communications network 108, thus allowing the analyst's computer 104 to establish network communications with the cloud computing environment 22 and/or with the server 24. The analyst's computer 104 may thus have access permissions to the cloud computing environment 22 and/or to the server 24. The analyst's computer 104 has a hardware processor 110 that executes a client-side version 62a of the command line assessment application 62 stored in a memory device 112. The command line assessment application 62 and the client-side version 62a may cooperate in a client-server relationship to facilitate a human analyst review of the cybersecurity detection 30, the command line(s) 28, the process trees 40, the command line interpretation 72, and/or the cybersecurity prediction 48.

FIG. 8 illustrates examples of a web interface. The analyst's computer 104 stores and executes a web browser 120 that interfaces with the client-side version 62a of the command line assessment application 62. When the human expert cybersecurity analyst 102 wishes to review the service records, the human expert cybersecurity analyst 102 commands the client-side version 62a of the command line assessment application to establish communication with the server 24. The human expert cybersecurity analyst 102, in particular, may access the command line interpretation service database 80 that logs the service records associated with the command line interpretation service 44. The web browser 120 and the client-side version 62a cooperate to request and to receive a webpage 122 having content representing the cybersecurity detection 30, the command line 28, the process tree 40, the command line interpretation 72, the cybersecurity prediction 48, and other service records retrieved from the command line interpretation service database 80. The analyst's computer 104 processes and displays the webpage 122 as a dashboard or other graphical user interface (GUI) 124 via a display device 126. The human expert cybersecurity analyst 102 may thus scrutinize the service records and type or enter command line interpretive feedback 126. The web browser 120 and the client-side version 62a cooperate to send the command line interpretive feedback 126 via the communications network 108 and the cloud computing environment 22 to the server 24. When the server 24 receives the command line interpretive feedback 126, the command line assessment application 62 may add a database entry to the electronic command line interpretation service database 80 that logs the command line interpretive feedback 126. The command line interpretive feedback 126 may thus be used to further train and refine the machine learning model 70.

The machine-learned command line interpretation service 44 may thus rely on the human expert cybersecurity analyst 102. While the command line assessment application 62 may autonomously and automatically generate the cybersecurity prediction 48 (using the machine learning model 70), the command line interpretation service 44 is improved by training using the command line interpretive feedback 126 provided by the human expert cybersecurity analyst 102. Even though the command line interpretation service 44 provides a fast-track determination and response, ongoing involvement of the human expert cybersecurity analyst 102 (using the command line interpretive feedback 126) continuously improves the strength and accuracy of the machine learning model 70 and, thus, the cybersecurity prediction 48. As the cybersecurity threats 36 continuously evolve and obfuscate, the guidance, training, and experience provided by the human expert cybersecurity analysts 102 curates the dataset from which the cybersecurity prediction 48 is developed.

The cybersecurity reinforcement learning 100 may utilize a comment mechanism. As the human expert cybersecurity analyst 102 reviews the service records (e.g., displayed via the webpage 122), the command line interpretive feedback 126 may be as simple or detailed as desired. The human expert cybersecurity analyst 102, for example, may compose and type a thorough and complex explanation of why, or why not, the command line interpretation service 44 accurately predicted malicious 50 or benign 52. Again, though, as the command line interpretation service 44 may process millions of daily cybersecurity reports, most human expert cybersecurity analysts 102 may not have time to input such elaborate comments. The webpage/GUI 122/124 may thus have graphical controls that allow the human expert cybersecurity analyst 102 to quickly input the command line interpretive feedback 126. Simple yes/no or thumbs up/down iconic button selections, for example, allow the human expert cybersecurity analyst 102 to quickly rate and input an affirmance or rejection of the cybersecurity prediction 48 output by the command line interpretation service 44.

Computer functioning is improved. Large language models may hallucinate and provide inaccurate results. The command line interpretation service 44, though, refines the machine learning model 70 using the cybersecurity instruction dataset 94 and/or using the command line interpretive feedback 126. The command line interpretation service 44 thus specifically trains the machine learning model 70 as the command line assistant 92 that accurately interprets the command lines 28 and the process trees 40. Indeed, whatever the evaluation mechanism, the cybersecurity reinforcement learning 100 reduces hallucinations and increases predictive accuracy. The command line interpretation service 44 incorporates the command line interpretive feedback 126 from teams of the human expert cybersecurity analysts 102. The ratings provided by the human expert cybersecurity analysts 102 may be stored as service records and input as training feedback to improve the command line interpretation service 44. The server 24, for example, may thus iteratively and continually refine its hardware and processor resources to improve detection of cybersecurity threats 36.

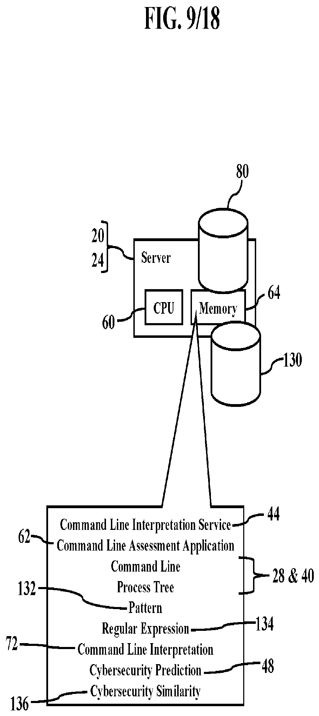

FIG. 9 illustrates some examples of cybersecurity enrichment. Because large language models may hallucinate, the command line interpretation service 44 may implement deterministic enrichment to further improve accuracy and, thus, increase confidence in its cybersecurity prediction 48. The command line interpretation service 44, for example, may access and apply a pattern database 130. The pattern database 130 has entries that map or relate the command lines 28 and the process trees 40 to their corresponding patterns 132. The patterns 132, for example, may represent regular expressions 134 that reflect the cybersecurity MITRE ATT&CK^{®} framework for classifying cybersecurity threats. The command line interpretation service 44 may thus generate the command line interpretation 72 and the cybersecurity prediction 48, based on the command line 28 and/or the process tree 40 (as previously explained). The command line interpretation service 44, however, may also query the pattern database 130 for the command line 28 and/or the process tree 40. The pattern database 130 may thus reveal the corresponding patterns 132 and/or the regular expressions 134 that are associated to the command line 28 and/or the process tree 40. The command line interpretation service 44 may thus log the patterns 132 and/or the regular expressions 134 as service records in the command line interpretation service database 80. The command line interpretation service 44 may also send the patterns 132 and/or the regular expressions 134 to the analyst's computer 104 (perhaps as additional content in the previously-explained webpage 122, as explained with reference to FIG. 8). The command line interpretation service 44 may thus present its command line interpretation 72 and the cybersecurity prediction 48 along with or alongside the matching patterns 132 and/or the regular expressions 134. Indeed, the command line assessment application 62 may generate a cybersecurity similarity 136 (perhaps using a similarity analysis) using the command line interpretation 72, the cybersecurity prediction 48, and/or the patterns 132 and the regular expressions 134. The command line interpretation service 44 may thus compare its command line interpretation 72 and the cybersecurity prediction 48 to the known matching patterns 132 and/or the regular expressions 134. The human expert cybersecurity analysts 102 may thus scrutinize and compare the command line interpretation service 44 to the known cybersecurity patterns 132 and/or the regular expressions 134. Because patterns 132 and the regular expressions 134 have a deterministic nature, the patterns 132 and the regular expressions 134 may be considered as reliable indicators of the cybersecurity threats 36.

The cybersecurity enrichment is simplified. FIG. 9, for simplicity, illustrates both the command line interpretation service database 80 and the pattern database 130 as local resources stored in the memory device 64 of the server 24. In actual practice, though, the command line interpretation service database 80 and the pattern database 130 may each be distributed databases that are maintained by clusters of servers affiliated with the cloud computing environment 22.

The command line interpretation service 44 may again describes the anatomy of the command line 28. The much-simpler, plain language command line interpretation 72, for example, describes what command is being invoked, which arguments are being supplied, and what is the function of each argument. The command line interpretation service 44 may also summarize the overall effect of the command line 28. Moreover, the command line interpretation service 44 may also generate and/or recommend mitigation strategies. The command line interpretation service 44, for example, may present the command line interpretation 72 in a structured way (such as summary, arguments, effects). The command line interpretation service 44 may also provide a confidence score or other measure, perhaps generated by the machine learning model 70. The command line interpretation service 44 may also provide recognized or baseline indicator, perhaps generated by the machine learning model 70.

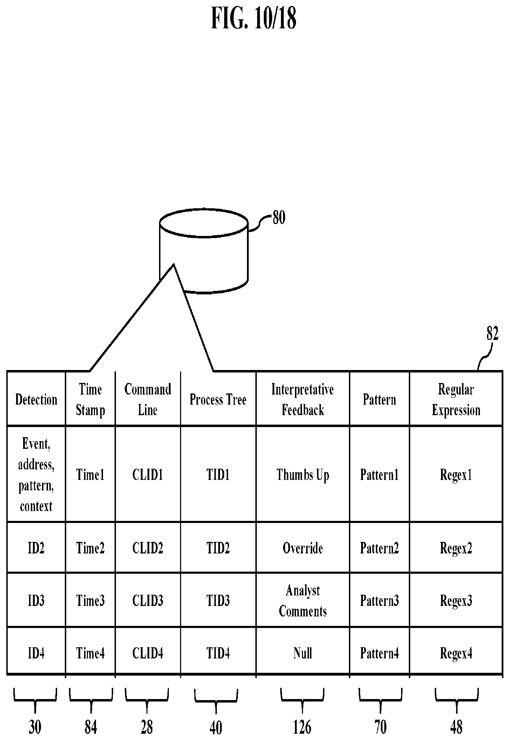

FIG. 10 illustrates more examples of cybersecurity service records. The command line interpretation service database 80 logs detailed service records that explain or document the command line interpretation service 44. As FIG. 10 illustrates, the command line interpretation service 44 may additionally log the command line interpretive feedback 126 submitted by the human expert cybersecurity analyst 102. While the cybersecurity service records may be distributed via the cloud computing environment 22 for logging and storage, FIG. 10 illustrates a simple example of unified storage. The command line interpretation service database 80 may also log corresponding pattern 132 and regular expression 134 enriched by the command line interpretation service 44. Indeed, the command line interpretation service database 80 may have expanded database entries that log information or data as detailed service records. The command line interpretation service database 80 thus maps these detailed service records that explain the command line interpretation service 44.

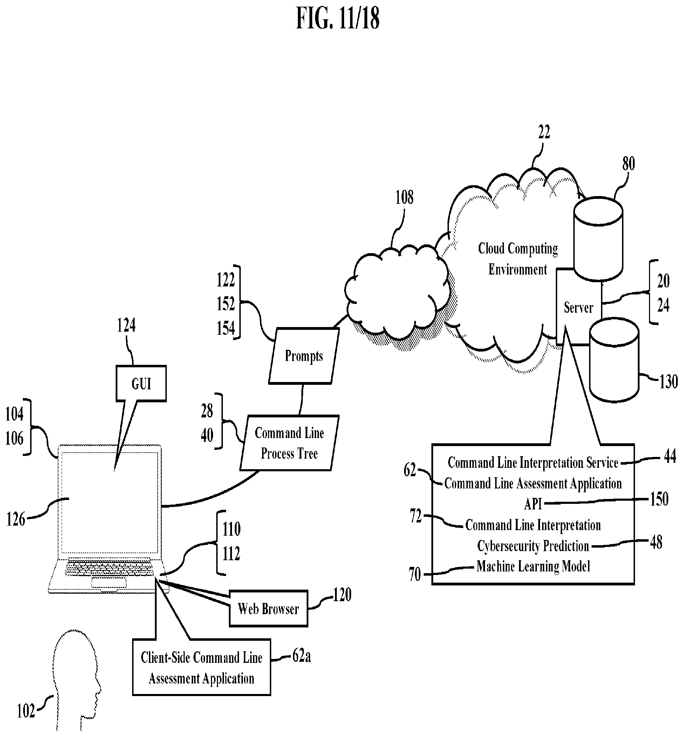

FIG. 11 illustrates some examples of application programming interfaces (or APIs) 150. The command line interpretation service 44 may use the APIs 150 to invoke or call its features and functions. FIG. 11, for simplicity, again illustrates the dedicated server 24 hosting the command line interpretation service 44. In actual practice, though, the command line interpretation service 44 may be distributed among one or more computing clusters affiliated with the cloud computing environment 22. The command line assessment application 62, for example, may instruct or cause the server 24 to use the APIs 150 to present a series of prompts 152 (perhaps via the webpage(s) 122) to the analyst's computer 104. The prompts 152 (perhaps displayed by the GUI 124) instruct the human expert cybersecurity analyst 102 to select/input the desired command line 28 and/or the process tree 40 to be interpreted. The command line interpretation service 44 may receive a command line interpretive request 154 from clients (such as the analyst's computer 104). The command line interpretive request 154, for example, may specify, reference, or include the command line 28 and/or the process tree 40 input to be interpreted. The command line interpretive request 154 may format the command line 28 and/or the process tree 40 according to an appropriate one of the APIs 150. When the cloud computing environment 22 receives the command line interpretive request 154, the cloud computing environment 22 may route the command line interpretive request 154 to the command line interpretation service 44 (hosted, for simplicity, by the server 24). The command line assessment application 62 may first check the command line interpretation service database 80 for historical service records (perhaps using an appropriate one of the APIs 150). If the command line interpretation service database 80 contains historical service records for the same, or similar, command line 28 and/or the process tree 40, then the command line assessment application 62 improves the functioning of the server 24 by retrieving and using the historical command line interpretation 72 and/or the historical cybersecurity prediction 48 historically logged by the command line interpretation service database 80. If, however, no historical service records match the command line 28 and/or the process tree 40, then the command line assessment application 62 submits the command line 28 and/or the process tree 40 to the machine learning model 70 (perhaps using a corresponding API 150). The command line interpretation service 44 may use the APIs 150 to store, request, and fetch data using formatting requirements. The command line interpretation service 44 may use the APIs 150 to access the pattern enrichments (such as the pattern database 130, as previously explained with reference to FIG. 9). The command line interpretation service 44 may use the APIs 150 to aggregate all the relevant outputs and to generate a response (such as the command line interpretation 72 and the cybersecurity prediction 48). A service (such as the machine learning model 70 and/or the pattern database 130) may thus interact with the command line interpretation service 44 using the APIs 150. Other services, such as the web interface (as explained with reference to FIG. 8) may also interact with the command line interpretation service 44 using the APIs 150. The human expert cybersecurity analyst 102 may thus use the analyst's computer 104 to paste code (representing the command line 28 and/or the process tree 40) and click a graphical button control within the webpage 122. An internal/external service or software application may thus send the command line interpretive request 154, even though blind to how the command line interpretation service 44 works. As long as the interpretive request is correctly formatted according to the specific API 150, the requesting service or software application may receive a response.

Examples help explain the command line interpretation service 44. Suppose the user (such as the human expert cybersecurity analyst 102) is scrutinizing a complicated command line 28. The human expert cybersecurity analyst 102, using the analyst's computer 104, copies and pastes the command line 28 into the GUI 124. When the human expert cybersecurity analyst 102 clicks/selects enter, the analyst's computer 104 sends the command line 28 to the command line interpretation service 44. The command line interpretation service 44 may first check for historical service records (as previously explained). If the command line 28 is unknown to the command line interpretation service 44 *(e.g.,* no historical service records exist for the command line 28), then the command line interpretation service 44 may send the command line 28 to the API 150. The API 150 takes the submitted command line 28 and inserts the command line 28 into a template (such as one of the prompts 152). The template contains detailed instructions for the machine learning model 70 (such as acceptable data kind and format). The command line interpretation service 44 thus populates the template and sends the populated template to the machine learning model 70. The machine learning model 70 may be a local or remote resource affiliated with the cloud computing environment 22. The machine learning model 70, however, may be an external service to the cloud computing environment 22 and affiliated with a third party service provider. Whatever the service arrangement, the machine learning model 70 generates the command line interpretation 72 and/or the cybersecurity prediction 48 as outputs. The machine learning model 70 may thus send a service response back to the requestor (such as the server 24 and/or the API 150), and the service response includes or references the command line interpretation 72 and/or the cybersecurity prediction 48.

The command line interpretation service 44 may thus post-process the service response from the machine learning model 70. The API 150, for example, may parse and format the service response from the machine learning model 70. The service response from the machine learning model 70, for example, may be a jumbled or unstructured blob of text containing various sections *(e.g.,* a short summary of what the command line 28 does and/or a simplified, more detailed description of its effects). The API 150, however, has logic statements, programming logic, and other code that extracts the relevant data from that blob of text. The API 150, for example, determines where each section begins and ends and extracts that data. The API 150 ensures that the service response from the machine learning model 70 is consistently arranged and formatted for ease of use.

The command line interpretation service 44 may also perform the pattern enrichment. The command line interpretation service 44, for example, may instruct or cause the API 150 to execute the various pattern-based enrichers (such as identifying the patterns 132 and the regular expressions 134 as explained with reference to FIG. 9). The command line interpretation service 44 may further determine which MITRE ATT&CK^{®} tactics and techniques are used in that command line 28.

The command line interpretation service 44 may also use the API 150 to store service records. The command line interpretation service 44, for example, may use the API 150 to add entries to the command line interpretation service database 80. The command line interpretation service 44 logs the command line 28 and/or the process tree 40, the corresponding command line interpretation(s) 72 and the cybersecurity prediction 48, the machine learning model 70, and the corresponding service timestamp 84 (as explained with reference to FIGs. 4 & 10). The command line interpretation service database 80 also logs the pattern enrichments (such as the patterns 132 and the regular expressions 134 as explained with reference to FIGs. 9-10).

The command line interpretation service 44 presents the service records to the user. Recall that the user (such as the human expert cybersecurity analyst 102) submitted the command line 28 to the command line interpretation service 44. When the command line interpretation service 44 completes its interpretation, the command line interpretation service 44 sends a service response to the requestor (such as the analyst's computer 104). The command line interpretation service 44, for example, may use the API 150 to further format the service response from the machine learning model 70, the command line interpretation 72, the cybersecurity prediction 48, and the pattern enrichments (such as the patterns 132 and the regular expressions 134). The command line interpretation service 44, in other words, may use the API 150 to present a unified and consistent interpretive result (perhaps formatted as content in the webpage 122) for display by the analyst's computer 104.

The command line interpretation service 44 may similarly interpret the process tree 40. The process tree 40 is a hierarchic arrangement of multiple command lines 28. The command line interpretation service 44 may thus translate the entire process tree 40. The human expert cybersecurity analyst 102 merely copies and pastes the process tree 40 into the GUI 124. The analyst's computer 104 sends the process tree 40 to the command line interpretation service 44. If any of the individual command lines 28, or the entire process tree 40, has been historically interpreted, the command line interpretation service 44 saves hardware/software resources, time, and electrical power by retrieving the historical service records (as previously explained). If the process tree 40 is unknown, though, the API 150 generates the prompt template using the individual command lines 28 hierarchically arranged as the process tree 40. The command line interpretation service 44 sends the successive prompts 152 as templates to the machine learning model 70 and receives successive command line interpretations 72 and cybersecurity predictions 48. The command line interpretation service 44 post-processes the service responses from the machine learning model 70 using the API 150 for consistency and ease of use. The command line interpretation service 44 may also perform the pattern enrichment and then log the service records to the command line interpretation service database 80. The command line interpretation service 44 then generates and sends a service response back to the analyst's computer 104.

The human expert cybersecurity analysts 102 may thus provide their command line interpretive feedback 126. When the analyst's computer 104 receives the service response, the analyst's computer 104 displays the command line interpretation 72 and/or the cybersecurity prediction 48. The human expert cybersecurity analyst 102 may thus inspect the service response and conduct the human analyst review. The human expert cybersecurity analyst 102, for example, may review the command line 28 and/or the process tree 40, the model-generated command line interpretation 72, and the cybersecurity prediction 48. If available, the human expert cybersecurity analyst 102 may review the cybersecurity similarity 136 generated by the similarity analysis (as explained with reference to FIG. 9). The human expert cybersecurity analyst 102 may then compare those service outputs to months or even years of experience in hunting the cybersecurity threats 36. The human expert cybersecurity analyst 102 may then type or enter the command line interpretive feedback 126 (as explained with reference to FIG. 8). The human expert cybersecurity analyst 102, for example, may type and enter an explanation of agreement or disagreement. The human expert cybersecurity analyst 102, however, may merely select simple yes/no or thumbs up/down iconic buttons. Whatever the command line interpretive feedback 126, the analyst's computer 104 sends the command line interpretive feedback 126 back to the server 24. The server 24 adds or logs the command line interpretive feedback 126 to the command line interpretation service database 80 as additional service records. The command line interpretation service 44 may then use the command line interpretive feedback 126 as the cybersecurity reinforcement learning 100 to further train and refine the machine learning model 70.

The human expert cybersecurity analyst 102 may thus override the command line interpretation service 44. The human expert cybersecurity analyst 102 may scrutinize the model-generated command line interpretation 72 and the cybersecurity prediction 48. The human expert cybersecurity analyst 102, for example, may agree with or approve the model-generated command line interpretation 72 and the cybersecurity prediction 48. The human expert cybersecurity analyst 102, however, may disagree with, reject, and/or even override the model-generated command line interpretation 72 and/or the cybersecurity prediction 48. The human expert cybersecurity analyst 102, in simple words, may consider the model-generated command line interpretation 72 and/or the cybersecurity prediction 48 as incorrect or wrong. The command line interpretive feedback 126 may thus represent a denial or override, and the command line interpretive feedback 126 may further include an explanation or reasoning. The command line interpretation service 44 (perhaps using the API 150) may thus store and log the command line interpretive feedback 126 to the command line interpretation service database 80 as historical service records. So, in subsequent queries, whenever the command line interpretation service 44 retrieves the historical service records (as previously explained), the command line interpretation service 44 will retrieve the command line interpretive feedback 126 for the same/similar command line 28 and/or process tree 40.

Malware detonation provides more examples. The command line interpretation service 44 may be integrated with malware detonation tools that document executed processes within sandbox environments. Upon documentation of the detonated processes, the command line interpretation service 44 outputs easy-to-read translations (in a desired language, such as English) of all process trees 40 and their command lines 28. Each command line interpretation 72 details the effects the respective process has on the subjected test computer system. The user (such as the human expert cybersecurity analyst 102) may scroll through the output (such as the webpage 122) to view a time-based log of the detonated command line 28 and/or the process tree 40. The user may scroll to any individual command of interest. The command line interpretation service 44 displays summaries of what the command is doing, along with a line-by-line breakdown of its effects, arguments, and additional notes. The command line interpretation service 44 also displays tree-level summaries of the command clusters as well as an overall summary of the entire process. The user merely submits an identifier of the command line 28 and/or the process tree 40. The user may optionally merely copy-and-paste an individual command line 28. The command line interpretation service 44 thus provides an elegant interpretative tool that significantly reduces the time and resources required to detect cybersecurity threats.

Process translation provides still more examples. The command line interpretation service 44 may be used to translate one-off commands via a web application (such as the command line assessment application 62). A user (such as the human expert cybersecurity analyst 102) may thus access the command line interpretation service 44 (such as via the analyst's computer 104) and submit commands that the analysts need help interpreting. The command line interpretation service 44 may translate all and/or parts of an entire cybersecurity detection 30 (such as identified by the endpoint cybersecurity agent 34 explained with reference to FIG. 1). The cybersecurity detection 30 may be a collection of processes executed on the client system 32 (either by hands-on-keyboard activity and/or programs that trigger security software tools, like antivirus, to block and notify administrators of potentially malicious activity). The command line interpretation service 44 may thus be integrated into EDR/XDR/MDR monitoring platforms and user interfaces (such as the GUI 124 explained with reference to FIG. 8).

Browser extensions provide even more examples. The command line interpretation service 44 may be implemented using one or more browser extensions to the web browser 120 (explained with reference to FIGs. 8 & 11). The browser extensions allow a user (such as the human expert cybersecurity analyst 102) to seamlessly select specific process(es), observed by security monitoring tools, for translation. The command line interpretation service 44 may thus translate specific processes encountered by analysts during daily workflow.

The command line interpretation service 44 may also integrate safeguards. The machine learning model 70 (such as the large language model 90) may hallucinate. Indeed, large language models are known to generate incorrect outputs with high conviction. The command line interpretation service 44, though, implements several counter-measures to mitigate negative impacts. The command line interpretation service 44, for example, utilizes prompt engineering (such as explained with reference to FIG. 11) to prompt the large language model 90 to reply in a specific, structured format. The command line interpretation service 44 also displays additional, non-LLM-generated data points alongside the command line interpretation 72 to foster user confidence. The command line interpretation service 44, for example, matches the command line 28 against a collection of the regular expressions 134 (such as explained with reference to FIG. 9). The regular expressions 134, for example, may be hand-curated by the human expert cybersecurity analysts 102. Moreover, the regular expressions 134 may further correspond to the cybersecurity MITRE ATT&CK^{®} framework for classifying the cybersecurity threats 36 as malicious 50 or benign 52. The command line interpretation service 44, as more examples, may allow the human expert cybersecurity analysts 102 to override an incorrect translation for a command line 28 (such as the command line interpretive feedback 126, as explained with reference to FIG. 8). The human expert cybersecurity analysts 102 may thus substitute their own expert cybersecurity assessment of the effects of the command line 28.

The command line interpretation service 44 may also integrate de-obfuscation features. Threat actors are always maliciously innovating and obfuscating their cybersecurity attacks. An obfuscated command line 28, for example, has been made illegible (such as by specialized encoding). This obfuscation is often done by adversaries in an attempt to confuse/evade anti-virus tools (such as the endpoint cybersecurity agent 34 explained with reference to FIGs. 1-2). The de-obfuscation features, though, undo those obfuscations in an automated manner (such as decoding). The command line interpretation service 44 may thus de-obfuscate processes that have been obfuscated and are difficult to translate. The command line interpretation service 44, for example, may rely on its integrated cybersecurity enrichment services (such as the pattern database 130 and the MITRE ATT&CK^{®} framework). The command line interpretation service 44 identifies the obfuscated process and/or command line 28, performs de-obfuscation, and then translates (perhaps using the historical service records or the machine learning model 70).

The command line interpretation service 44 continuously improves. As the command line interpretation service 44 operates, the command line interpretation service database 80 grows to become a rich repository of very accurate cybersecurity records. The database records may thus be used to train and refine the machine learning model 70, especially using the command line interpretive feedback 126 obtained from the human expert cybersecurity analysts 102. The command line interpretation service 44 may thus automate the use of these detailed service records to enhance translation accuracy. The command line interpretation service 44, for example, may fine-tune the machine learning model 70 and associated weighting factors. The command line interpretation service 44 may also utilize retrieval-augmented generation, whereby a new command line 28 or process tree 40 initiates a search of the command line interpretation service database 80 for similar, historical entries. The historical service records, in other words, may be retrieved and used as additional data points for informing the translation of the new command line 28 or process tree 40.

The training data may be expanded. The command line interpretation service 44 may additionally train and fine-tune the machine learning model 70 using service tickets. Because the command line interpretation service 44 may be integrated into EDR/XDR/MDR monitoring platforms, these monitoring services utilize service tickets. The command line interpretation service 44, for example, may refine the machine learning model 70 using true positive cybersecurity detections 30, as well as those where the hosts *(e.g.,* the client devices 32) needed to be contained and remediated. Again, there may be millions of true positive cybersecurity detections 30, and these service tickets may be a training corpus.

The command line interpretation service 44 may also suggest countermeasures. The command line interpretation service database 80 is a rich repository of very accurate cybersecurity records. The command line interpretation service 44, then, may inspect these historical cybersecurity service records and recommend, or suggest, historical remediations to current true positive cybersecurity detections 30. The command line interpretation service 44, for example, may search historical remediations taken by the human expert cybersecurity analysts 102 (as logged by the command line interpretation service database 80). The command line interpretation service 44 may search for, retrieve, and return these historical, expert remediations most similar to new cybersecurity detections 30. The command line interpretation service 44 may further condense and synthesize historical, expert remediations for quick and effective resolution.

The command line interpretation service 44 may also have customer interfaces. The command line interpretation service 44 may have a customer-facing interface (such as the GUI 124) that is tailored to corporate, small business, individuals, and other customers. The command line interpretation service 44 may thus allow customers to translate the command lines 28 and process trees 40.

Computer functioning is again improved. Malicious software can ruin computer operations. The endpoint cybersecurity agent 34 and/or the server 24 must quickly identify the malicious 50 or benign 52 nature of software to minimize damage to the client computer/device 32. Because the command line assessment application 62 utilizes the historical service records and the machine learning model 70, the cloud-based command line interpretation service 44 is very fast and very simple to execute. The server 24 need merely retrieve, or generate, the cybersecurity prediction 48 in perhaps seconds. The command line assessment application 62 consumes little space (in bits/bytes) in the memory device 64. Moreover, the hardware processor 60 requires less cycles and less time to classify the cybersecurity detection 28. Computer resources are reduced, and less electrical power is required to test for presence of malicious computer behavior. The cloud-based command line interpretation service 44 is thus very fast and very simple, allowing the server 24 to quickly assess the thousands of cybersecurity detections 28 reported each week. The cloud-based command line interpretation service 44 thus greatly improves computer functioning of the server 24 when detecting cybersecurity threats 36.

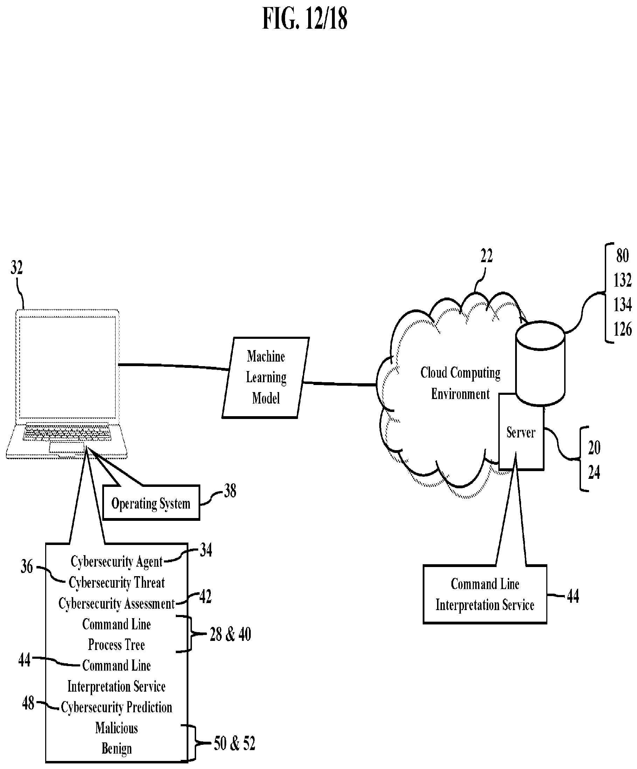

FIG. 12 illustrates some examples of local assessment. When the endpoint cybersecurity agent 34 (installed to the client device 32) detects the potential cybersecurity threat 36, the cybersecurity agent 34 may locally assess the cybersecurity threat 36. The endpoint cybersecurity agent 34, in other words, may locally conduct the cybersecurity assessment 42 of the command line(s) 28 and/or the process tree(s) 40 associated with the potential cybersecurity threat 36. The client device 32 has a hardware processor that executes the endpoint cybersecurity agent 34 stored in a memory device (not shown for simplicity). The endpoint cybersecurity agent 34, for example, may include software programming, code, or instructions that locally provides at least a portion of the command line interpretation service 44. The endpoint cybersecurity agent 34 cooperates with the operating system 38 to obtain the command line(s) 28 and/or the process tree(s) 40 (perhaps using event notifications). The endpoint cybersecurity agent 34 locally generates the cybersecurity prediction 48 as an output. The endpoint cybersecurity agent 34 may thus download, store, and execute the machine learning model 70 to itself predict whether the command line(s) 28 and/or the process tree(s) 40 is/are malicious 50 or benign 52. The machine learning model 70, in other words, may thus be pre-trained by the cloud computing environment 22 to account for the historical service records stored in the command line interpretation service database 80. The machine learning model 70 may also be pre-trained by the cloud computing environment 22 to account for the pattern enrichment (such as the patterns 132 and the regular expressions 134 as explained with reference to FIG. 9). The machine learning model 70 may also be pre-trained by the cloud computing environment 22 to account for the command line interpretive feedback 126 provided by the human expert cybersecurity analysts 102. The cloud computing environment 22 may thus pre-train the machine learning model 70 and then send/download/distribute the pre-trained machine learning model 70 to clients in the field (such as the client device 32 and/or the endpoint cybersecurity agent 34.

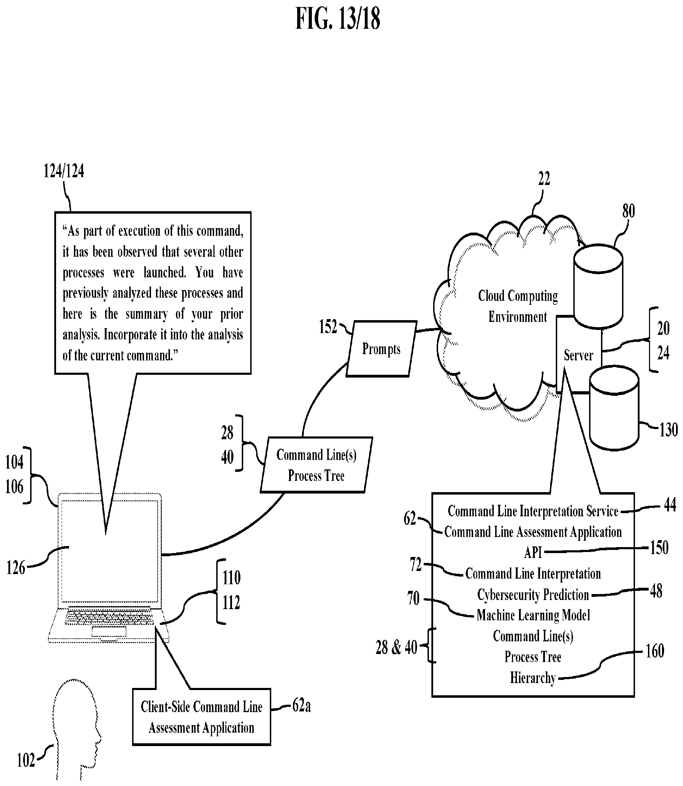

FIGs. 13-14 illustrate examples of recursive analysis. As this disclosure above explained, the command line interpretation service 44 accepts the command line(s) 28 and/or the process tree(s) 40 as inputs. The command line interpretation service 44 then generates the command line interpretation 72 as an output, and the command line interpretation 72 is a much simpler, plain language explanation. Because the command lines 28 and process trees 40 may be exceptionally complex, the command line interpretation service 44 helps the human expert cybersecurity analyst 102 to quickly assess potential threats. The human expert cybersecurity analyst 102, for example, often must analyze the process tree 40 rather than individual command lines 28. The process tree 40 may be a hierarchy 160 of multiple command lines 28, where a parent command line 28 has resulted in execution of child or sub-process command lines 28. So, when the process tree 40 is entered or submitted as an input, the command line assessment application 62 may recursively analyze the process tree 40 according to the hierarchy 160. The command line assessment application 62, for example, may be recursively applied to the process tree 40 in depth-first order within the hierarchy 160. The command line assessment application 62 may first summarize each sub-process within the process tree 40. The command line assessment application 62 may then present the sub-process summary to the machine learning model 70 or LLM 90 as additional context with the parent command line 28. This recursive analysis allows the machine learning model 70 or LLM 90 to analyze the overall program effect while working around limitations of smaller context windows.

Prompting may help define the hierarchy 160. The command line assessment application 62, for example, may present the series of prompts 152 (perhaps via the webpage/GUI 122/124) to the analyst's computer 104. The prompts 152 may thus help the human expert cybersecurity analyst 102 input and specify the hierarchy of the command lines 28 associated with the process tree 40. At each level of the process tree 40, for example, the prompts 152 may display guiding language that distinguishes individual command lines 28 from sub-processes within the process tree 40.

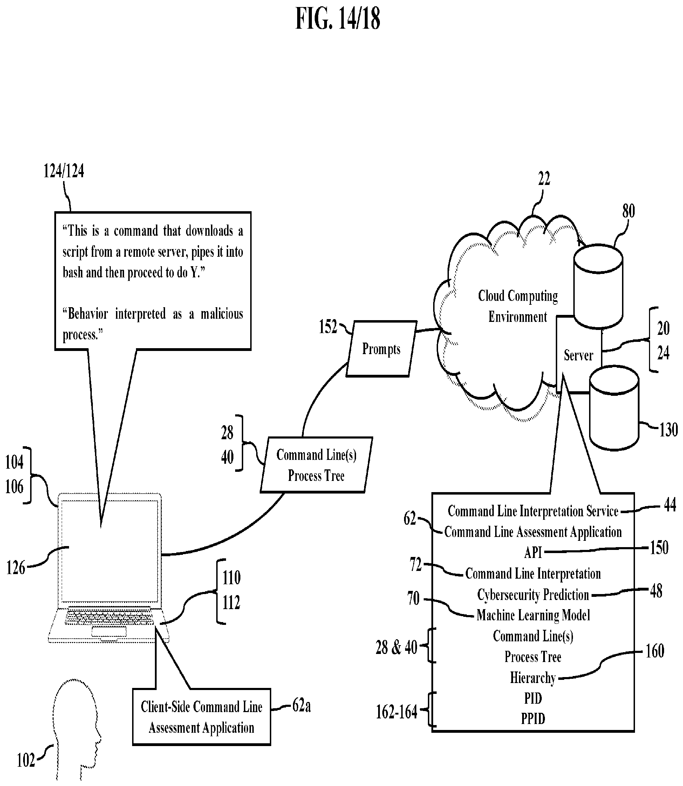

FIG. 14 illustrates more examples of recursive analysis. Sometimes the command line 28 is too opaque to be analyzed (such as by the human expert cybersecurity analyst 102). The command line 28, as an example, may be obfuscated. The command line 28, as another example, may be a custom binary of which little is known (except perhaps a name). The command line 28, as more examples, may be a program that obtains instructions from another unknown file and/or from a remote source. In other words, little or nothing is known about the command line 28, so ordinarily no information is available on which to base any interpretation. However, once the command line interpretation service 44 determines other command lines 28 that were launched (such as child processes), the sum total of all those command lines 28 may reveal much interpretative information (such as some knowledge or observation of what the current command's overall effects were). The command line interpretation service 44 may thus recursively present sub-process summary/summaries to the machine learning model 70 or LLM 90. This technique allows information known from child process analysis to be incorporated recursively to the top process for easy consumption by the human expert cybersecurity analyst 102 or for other purposes.

Still more examples explain recursive analysis. Each process associated with the process tree 40 may be associated with process identifier (or "PID") 162 and/or with a parent process identifier (or "PPID") 164. For example, if process A with PID1 spawns process B with PID2, process B will have PPID1. A more realistic example may be an initial command line 28 used by a malicious actor (such as, paraphrased to human readable terms, "run powershell script X"). Let's call this process AA with PID11. If the model 70/90 only sees that command line 28, the model 70/90 may be unable to determine what the command is going to do, as script X is unknown. As script X is executed, though, the process tree 40 unfolds and reveals what script X does by observing which processes are spawned A spawned process, for example, may try to elevate the privileges of the malicious actor *(e.g.,* call this process BB with PID22 and PPID11, because it was spawned by process AA, which has PID11). A spawned process, as another example, may try to copy some file from the client computer 32 to a server controlled by the malicious actor (e.g., process C, PID3, PPID11). As still another example, the spawned process may try to download some malicious code from a server controlled by the malicious actor (e.g., process D, PID4, PPID11). If the download succeeds, the script X might try to run the downloaded code by "piping" (=passing it along) to bash. The bash process would now be process E with PID5 and PPID4, because it was spawned by the same process that did the download. As yet another example, the downloaded code might then start some other process, which would have PPID5, because it was spawned by the bash process and so on.

The hierarchy 160 of the command lines 28 associated with the process tree 40 may thus be defined or specified by the process identifier 162 and/or by the parent process identifier 164. The process identifiers 162 and/or the parent process identifiers 164, however, need not be sequentially assigned nor specified. The command line interpretation service 44 may read the identifiers 162 and 164 as tags, classifiers, labels, or other metadata that exposes the hierarchy 160 of the command lines 28 associated with the process trees 40. The command line interpretation service 44 may thus start with the last processes that were run, and hierarchically advancing or going up to the root. The command line interpretation service 44, for example, may start by feeding/inputting the bash process to the model 70/90. The command line interpretation service 44 thus interprets the bash as doing Y in simple terms. A next prompt 152 to the model 70/90 may input or show the downloaded command line 28 (such as process E with PID5 and PPID4, as above explained). The prompt 152 may thus cause the model 70/90 to inspect the command line 28 and to interpretatively analyze the spawned child process ("runs bash and does Y," as above explained). The model 70/90 may thus conclusively interpret the command line 28 *(e.g.,* "this is a command that downloads a script from a remote server, pipes it into bash and then proceed to do Y").

Still more recursive processing may be performed. For example, in parallel to the previous step, the command line interpretation service 44 may input the processes C and D (as above explained) to the model 70/90 and determine their respective actions or results (perhaps even executed in parallel, as processes C, D and E are all independent from one another, *i.e.,* they appear at the same depth of the process tree 40). This parallel execution makes the whole analysis procedure run faster.

Even more recursive processing may be performed. Once the responses for all three children of A are interpreted, the command line interpretation service 44 may further instruct the model 70/90 to analyze the command "run powershell script X" and provide an operative interpretation. Recall, though, that command line 28 already spawned three child processes and those child processes i) tried to elevate the privileges of the user, ii) tried to copy some file from the client computer 32 to a remote server, and iii) tried to download a script from a remote server, pipes it into bash and then proceed to do Y. Given this information, the model 70/90 may thus interpretatively reveal that "script X" is a poweshell script that tries to elevate user privileges, tries to copy files from the computer to a remote server, downloads a script from a remote server, pipes it into bash and then proceeds to do Y. The command line interpretation service 44 may thus predict that this type of behavior is likely a malicious process.

Improved computer functioning is now evident. Recall that the initial command line 28 ("run powershell script X") was opaque and unknown. As the command line interpretation service 44 recursively and hierarchically analyzed the command line 28, though, the command line interpretation service 44 reveals the entire process tree 40 and interpretatively determines a full suite of inputs/outputs/results. The command line interpretation service 44 may thus recursively interpret each command line 28 associated with the process tree 40 by comparing the command line 28 to the historical command line interpretations 72 previously generated using the machine learning model 70. The command line assessment application 62, for example, may query the command line interpretation service database 80 for historical command line interpretation(s) 72 previously logged for each command line 28 associated with the process tree 40. The command line interpretation service 44, as another example, may access and apply the pattern database 130 that maps or relates the command lines 28 and the process trees 40 to their corresponding patterns 132. The command line interpretation service 44 may identify the hierarchy 160 of the command lines 28 associated with the process tree 40 using the process identifiers 162 and/or the parent process identifiers 164. The command line interpretation service 44 may further generate the cybersecurity prediction 48 associated with the process tree 40 based on the recursively interpreting of the command lines 28. The command line interpretation service 44 may further classify an individual command line 28, and/or the process tree 40, as malicious or benign.

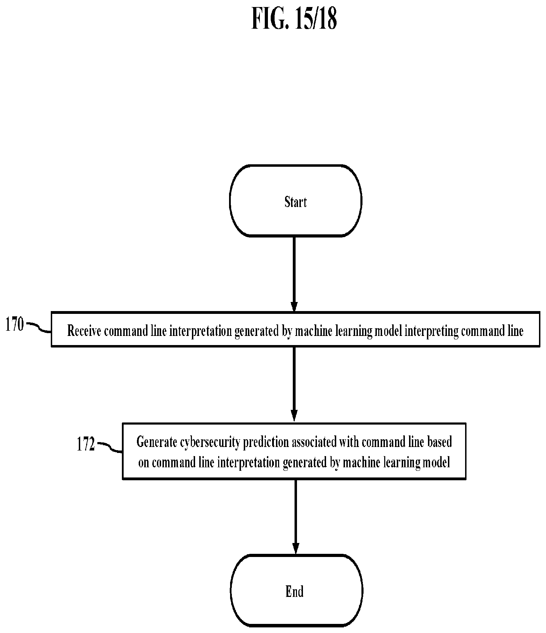

FIG. 15 illustrates examples of a method or operations that assess the command line 28. The command line interpretation 72 is received that was generated by the machine learning model 70 interpreting the command line 28 (Block 170). The cybersecurity prediction 48, associated with the command line 28, is generated based on the command line interpretation 72 generated by the machine learning model 70 (Block 172).

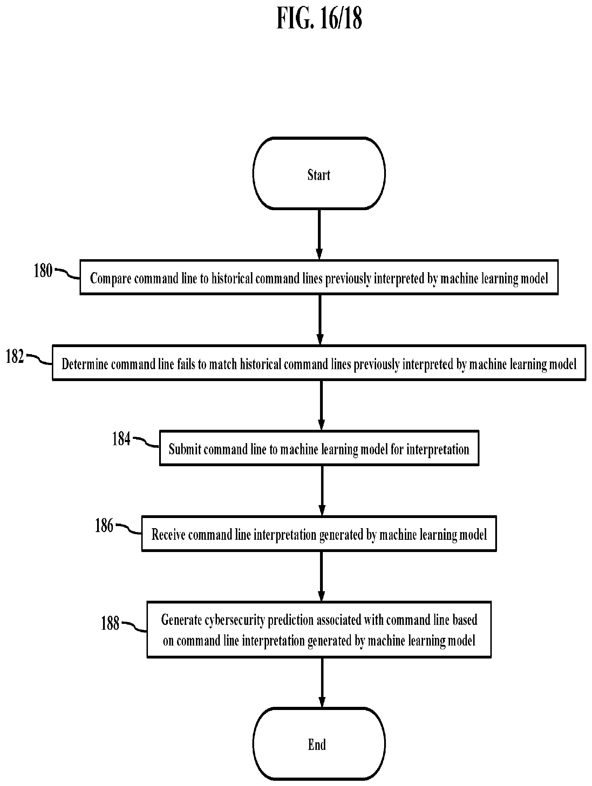

FIG. 16 illustrates more examples of a method or operations that assess the command line 28. The command line 28 is compared to historical command lines previously interpreted by the machine learning model 70 (such as logged in the command line interpretation service database 80) (Block 180). When the command line 28 fails to represent one of the historical command lines previously interpreted by the machine learning model 70 (Block 182). then the command line 28 is submitted to the machine learning model 70 (Block 184). The command line interpretation 72 generated by the machine learning model 70 is received (Block 186). The cybersecurity prediction 48 is generated based on the command line interpretation 72 generated by the machine learning model 70 (Block 188).

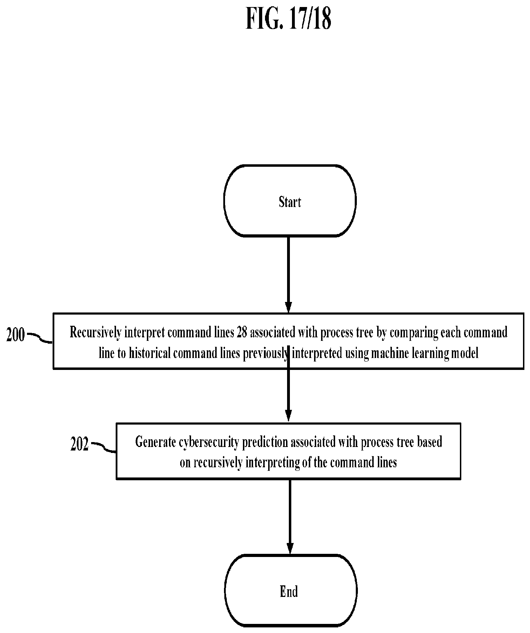

FIG. 17 illustrates still more examples of a method or operations that assess the command lines 28 associated with the process tree 40. The command line interpretation service 44 recursively interprets the command lines 28 associated with the process tree 40 by comparing each command line 28 to the historical command lines previously interpreted using the machine learning model 70 (Block 200). The command line interpretation service 44 may further generate the cybersecurity prediction 48 associated with the process tree 40 based on the recursively interpreting of the command lines 28 (Block 202).

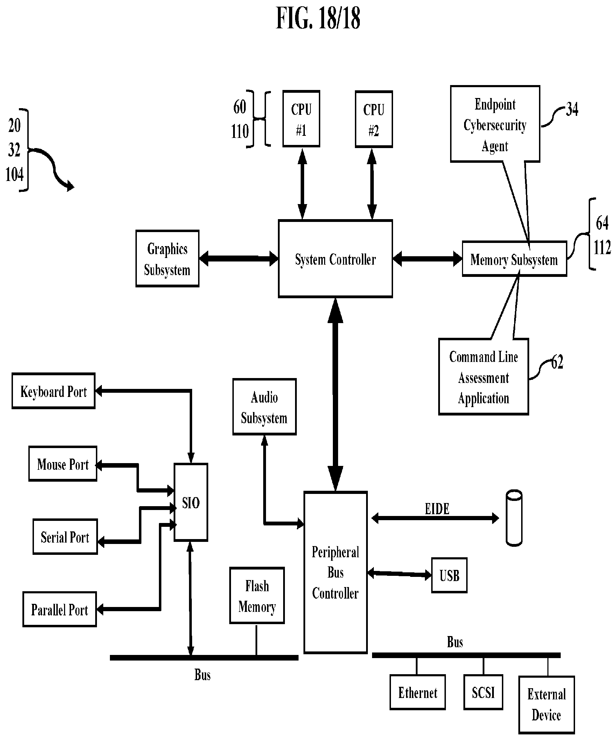

FIG. 18 illustrates a more detailed example of the operating environment. FIG. 18 is a more detailed block diagram illustrating the computer system 20, the client device 32, and/or the analyst's computer 104. The command line assessment application 62, and/or the endpoint cybersecurity agent 34, is stored in the memory subsystem or device 64/112. One or more of the hardware processors 60/110 communicate with the memory subsystem or device 64/112 and execute the command line assessment application 62 and/or the endpoint cybersecurity agent 34. Examples of the memory subsystem or device 64/112 may include Dual In-Line Memory Modules (DIMMs), Dynamic Random Access Memory (DRAM) DIMMs, Static Random Access Memory (SRAM) DIMMs, non-volatile DIMMs (NV-DIMMs), storage class memory devices, Read-Only Memory (ROM) devices, compact disks, solid-state, and any other read/write memory technology. Because the computer system 20, the client device 32, and/or the analyst's computer 104 is known to those of ordinary skill in the art, no detailed explanation is needed.

The computer system 20, the client device 32, and/or the analyst's computer 104 may have any embodiment. This disclosure mostly discusses the computer system 20 as the server 24. The analyst's computer 104 is mainly explained as the laptop computer 106. The client device 30 is mainly illustrated as a laptop computer. The command line interpretation service 44, however, may be easily adapted to any stationary or mobile computing, such as a desktop computer, a tablet computer, a smartwatch, and a network switch/router. The command line interpretation service 44 may also be easily adapted to other embodiments of smart devices, such as a television, an audio device, a remote control, and a recorder. The command line interpretation service 44 may also be easily adapted to still more smart appliances, such as washers, dryers, and refrigerators. Indeed, as cars, trucks, and other vehicles grow in electronic usage and in processing power, the command line interpretation service 44 may be easily incorporated into a vehicular controller.

The above examples of the command line interpretation service 44 may be applied regardless of the networking environment. The command line interpretation service 44 may be easily adapted to stationary or mobile devices having wide-area networking (e.g., 4G/LTE/5G/6G/7G cellular), wireless local area networking (WI-FI^{®}), near field, and/or BLUETOOTH^{®} capability. The command line interpretation service 44 may be applied to stationary or mobile devices utilizing any portion of the electromagnetic spectrum and a signaling standard (such as the IEEE 802 family of standards, GSM/CDMA/TDMA or other cellular standard, and/or the ISM band). The command line interpretation service 44, however, may be applied to any processor-controlled device operating in the radio-frequency domain and/or the Internet Protocol (IP) domain. The command line interpretation service 44 may be applied to any processor-controlled device utilizing a distributed computing network, such as the Internet (sometimes alternatively known as the "World Wide Web"), an intranet, a local-area network (LAN), and/or a wide-area network (WAN). The command line interpretation service 44 may be applied to any processor-controlled device utilizing power line technologies, in which signals are communicated via electrical wiring. Indeed, the many examples may be applied regardless of physical componentry, physical configuration, or communications standard(s).

The command line interpretation service 44 may utilize a processing component, configuration, or system. For example, the command line interpretation service 44 may be easily adapted to a desktop, mobile, or server central processing unit, chipset, and graphics processing unit offered by INTEL^{®}, ADVANCED MICRO DEVICES^{®}, ARM^{®}, APPLE^{®}, TAIWAN SEMICONDUCTOR MANUFACTURING^{®}, QUALCOMM^{®}, or other manufacturer. The command line interpretation service 44 may even use multiple central processing units or chipsets, which could include distributed processors or parallel processors in a single machine or multiple machines. The central processing unit or chipset can be used in supporting a virtual processing environment. The central processing unit or chipset could include a state machine or logic controller. When any of the central processing units or chipsets execute instructions to perform operations, this could include the central processing unit or chipset performing the operations directly and/or facilitating, directing, or cooperating with another device or component to perform the operations.

The command line interpretation service 44 may use packetized communications. When the computer system 20, the client device 32, and/or the analyst's computer 104 communicates via the cloud computing environment 22, information may be collected, sent, and retrieved. The information may be formatted or generated as packets of data according to a packet protocol (such as the Internet Protocol). The packets of data contain bits or bytes of data describing the contents, or payload, of a message. A header of each packet of data may be read or inspected and contain routing information identifying an origination address and/or a destination address.

The command line interpretation service 44 may utilize a signaling standard. The computer system 20, the client device 32, the analyst's computer 104, and the cloud computing environment 22 may mostly use wired networks to interconnect network members. However, the computer system 20, the client device 32, the analyst's computer 104, and the cloud computing environment 22 may utilize any communications device using the Global System for Mobile (GSM) communications signaling standard, the Time Division Multiple Access (TDMA) signaling standard, the Code Division Multiple Access (CDMA) signaling standard, the "dual-mode" GSM-ANSI Interoperability Team (GAIT) signaling standard, or a variant of the GSM/CDMA/TDMA signaling standard. The command line interpretation service 44 may also utilize other standards, such as the I.E.E.E. 802 family of standards, the Industrial, Scientific, and Medical band of the electromagnetic spectrum, BLUETOOTH^{®}, low-power or near-field, and other standard or value.

The command line interpretation service 44 may be physically embodied on or in a computer-readable storage medium. This computer-readable medium, for example, may include CD-ROM, DVD, tape, cassette, floppy disk, optical disk, USB flash memory drive, memory card, memory drive, and large-capacity disks. This computer-readable medium, or media, could be distributed to end-subscribers, licensees, and assignees. A computer program product comprises processor-executable instructions for assessing the command lines 28, as the above paragraphs explain.

The diagrams, schematics, illustrations, and the like represent conceptual views or processes illustrating examples of cybersecurity command line assessment. The functions of the various elements shown in the figures may be provided through the use of dedicated hardware as well as hardware capable of executing instructions. The hardware, processes, methods, and/or operating systems described herein are for illustrative purposes and, thus, are not intended to be limited to any particular named manufacturer or service provider.

As used herein, the singular forms "a," "an," and "the" are intended to include the plural forms as well, unless expressly stated otherwise. It will be further understood that the terms "includes," "comprises," "including," and/or "comprising," when used in this Specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

It will also be understood that, although the terms first, second, and so on, may be used herein to describe various elements, these elements should not be limited by these terms. These terms are only used to distinguish one element from another. For example, a first computer or container could be termed a second computer or container and, similarly, a second device could be termed a first device without departing from the teachings of the disclosure.

The present teaching may also extend to the aspects set forth in the following numbered clauses:
1. A computer program that, when executed by a central processing unit, is configured to perform a method comprising:
   recursively interpreting command lines associated with a process tree by comparing each command line of the command lines to historical command lines previously interpreted by a command line interpretation service using a machine learning model; and
   determining a cybersecurity prediction associated with the process tree based on the recursively interpreting of the command lines.
2. The computer program of clause 1, further comprising hierarchically associating the command lines with the process tree using process identifiers.
3. The computer program of clause 1 or 2,further comprising classifying the process tree as malicious or benign.
4. The computer program of any one of clauses 1 to 3, further comprising hierarchically associating the command lines with the process tree using parent process identifiers.

## Claims

1. A method executed by a computer system that assesses a command line, comprising:
receiving, by the computer system, a command line interpretation generated by a machine learning model interpreting the command line; and
generating, by the computer system, a cybersecurity prediction associated with the command line based on the command line interpretation generated by the machine learning model.

2. The method of claim 1, further comprising classifying the command line as malicious or benign based on the command line interpretation generated by the machine learning model.

3. The method of claim 1 or 2, further comprising submitting the command line to a command line interpretation service providing the command line interpretation generated by the machine learning model.

4. The method of any preceding claim, further comprising training the machine learning model as a command line assistant using a corpus of embeddings representing command lines.

5. The method of any preceding claim, further comprising receiving command line interpretive feedback associated with the command line interpretation generated by the machine learning model.

6. The method of any preceding claim, further comprising identifying a cybersecurity pattern associated with the command line.

7. The method of any preceding claim, further comprising identifying an enrichment associated with the command line.

8. The method of any preceding claim comprising, in advance of receiving the command line interpretation generated by the machine learning model based on the command line; and generating the cybersecurity prediction associated with the command line based on the command line interpretation generated by the machine learning model:
comparing the command line to historical command lines previously interpreted by a machine learning model;
determining the command line fails to represent one of the historical command lines previously interpreted by the machine learning model; and
in response to the determining that the command line fails to represent one of the historical command lines previously interpreted, submitting the command line to the machine learning model.

9. The method of claim 8, further comprising determining the command line represents a historical command line of the historical command lines previously interpreted by the machine learning model.

10. The method of claim 9, wherein in response to the determining that the command line represents the historical command line previously interpreted by the machine learning model, the method further comprises declining to submit the command line to the machine learning model.

11. The method of claim 10, further comprising retrieving a historical command line interpretation previously generated by the machine learning model that corresponds to the historical command line previously interpreted by the machine learning model.

12. The computer system of claim 11, wherein the operations further comprise generating the cybersecurity prediction associated with the command line based on the historical command line interpretation previously generated by the machine learning model.

13. A computer system that assesses a command line, comprising:
at least one central processing unit; and
a memory device storing instructions that, when executed by the at least one central processing unit, perform the method of any one of claims 1 to 12.

14. A memory device storing instructions that, when executed by a central processing unit, perform operations, comprising:
recursively interpreting command lines associated with a process tree by comparing each command line of the command lines to historical command lines previously interpreted by a command line interpretation service using a machine learning model; and
determining a cybersecurity prediction associated with the process tree based on the recursively interpreting of the command lines.

15. The memory device of claim 17, wherein the operations further comprise at least one of:
hierarchically associating the command lines with the process tree using process identifiers;
classifying the process tree as malicious or benign; or
hierarchically associating the command lines with the process tree using parent process identifiers.
